**Europäisches Patentamt**

**European Patent Office**

**Office européen des brevets**

(11) Veröffentlichungsnummer: **0 179 209 B1**

## EUROPÄISCHE PATENTSCHRIFT

(45) Veröffentlichungstag der Patentschrift: **01.04.92**

(21) Anmeldenummer: **85109650.3**

(22) Anmeldetag: **31.07.85**

(51) Int. Cl.⁵: **G05D 1/00**, B64C 13/50

(54) **Steuer-Vorrichtung für Luftfahrzeugen, insbesonder Hubschraubern.**

(30) Priorität: **28.08.84 DE 3431583**

(43) Veröffentlichungstag der Anmeldung:
**30.04.86 Patentblatt 86/18**

(45) Bekanntmachung des Hinweises auf die
Patenterteilung:
**01.04.92 Patentblatt 92/14**

(84) Benannte Vertragsstaaten:
**DE FR GB IT**

(56) Entgegenhaltungen:
**FR-A- 2 377 323**
**GB-A- 2 022 034**
**GB-A- 2 135 796**
**US-A- 3 700 995**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **König, Herbert, Dipl.-Ing.
Schönstrasse 45
W-8000 München 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Steuervorrichtung für Luftfahrzeuge, insbesondere Hubschrauber, gemäß dem Oberbegriff des Patentanspruchs 1.

Der bei dieser üblichen Konstruktion vorgesehene Trimmotor dient dazu, den Steuerknüppel nach Eingabe von Steuerbewegungen und Eintritt des neuen Flugzustandes wieder kräftefrei zu machen. Dies erreicht der Pilot durch einen am Steuerknüppel angebrachten Trimmschalter, mit dem er dem Trimmotor entsprechende Steuerbefehle geben kann, woraufhin dieser durch Ein- oder Ausfahren seiner Trimmstange die Spannung der Feder so weit verändert, daß die Steuerbewegung des Steuerknüppels kompensiert wird und dieser erneut kräftefrei ist. Es können jedoch jederzeit ungewollte Störkräfte auf den Steuerknüppel einwirken, die durch auftretende Beschleunigungen verursacht werden. In diesem Falle führen die im Steuergestänge unvermeidbar vorhandenen unausgeglichenen trägen Massen zu Störmomenten bzw. -kräften, die auf den Steuerknüppel einwirken.

Auch dieser selbst ist den Trägheitskräften ausgesetzt, und es hängt von der Massenverteilung der Masse des Steuerknüppels selbst sowie der anderen durch Trägheitskräfte an ihm angreifenden Massen und schließlich von dem Ort des Drehlagerpunktes des Steuerknüppels ab, in welcher Richtung das resultierende Moment auf ihn einwirkt. Derartige Störkräfte bzw. -momente treten auch dann auf, wenn der Pilot eine bewußte Steuerbewegung veranlaßt, so beispielsweise bei einem aufwärts gerichteten Kurvenflug. Da die auftretenden Störkräfte nicht von vornherein einschätzbar sind, können sie den Piloten verunsichern und ihn bei der einwandfreien Beherrschung des Fluggerätes behindern.

Der Erfindung liegt daher die Aufgabe zugrunde, eine Vorrichtung der eingangs genannten Art bereitzustellen, mit der infolge von Trägheitskräften auf den Steuerknüppel einwirkende Störkräfte bzw. -momente möglichst weitgehend kompensiert werden können, Steuerkraftfehler also automatisch beseitigt werden können.

Diese Aufgabe wird gemäß der Erfindung durch die im kennzeichenden Teil des Patentanspruches 1 genannten Merkmale gelöst.

Zwar ist aus der GB-A-2 135 796 ebenfalls eine Steuervorrichtung der eingangs genannten Art bekannt, jedoch ist diese nicht dazu bestimmt, Steuerkraftfehler automatisch zu beiseitigen, sondern lediglich dazu, einen variablen Trimmeingriff zu ermöglichen. Das Summensignal eines Summationsgliedes, in welchem das Meßsignal eines den Stellweg der Trimmstange eines Trimmotors messenden Weggebers von dem Meßsignal eines den Steuerweg des Steuergestänges messenden weiteren Weggebers subtrahiert wird, dient lediglich dazu, das Verhalten der Vorrichtung bei Abgabe von Trimmsignalen durch einen am Steuerknüppel angebrachten Trimmschalter zu beeinflussen. Einem ausgangsseitig ein Ansteuersignal für den Trimmotor liefernden Summationsglied werden im wesentlichen das Meßsignal des den Stellweg der Trimmstange messenden Weggebers sowie ein von einem Nickkreisel stammendes Signal zugeführt. Diese Steuervorrichtung ist nicht in der Lage, Störkräfte bzw. -momente der oben charakterisierten Art zu kompensieren.

Wie anhand der weiter unten folgenden, detaillierten Beschreibung eines Ausführungsbeispieles deutlich wird, ist die gemäß der Erfindung ausgestaltete Vorrichtung in der Lage, auf den Steuerknüppel einwirkende Trägheitskräfte nahezu vollständig zu kompensieren. Die Flugsicherheit wird dadurch in erheblichem Maße gesteigert. Weiterhin zeichnet sich die Vorrichtung durch große konzeptionelle Einfachheit, verbunden mit äußerst geringem apparativem sowie schaltungstechnischem Aufwand, sowie dadurch aus, daß es durch geeignete Wahl des einstellbaren Verstärkungsfaktors des Verstärkers möglich wird, die für den Piloten fühlbare Federkraft durch quasi elektronische Veränderung der Federkonstante an dessen individuelle Wünsche anpaßbar zu machen. Auch dies wird weiter unten verdeutlicht werden.

Im folgenden wird die Erfindung anhand eines in den Abbildungen schematisch dargestellten Ausführungsbeispieles näher erläutert. Es zeigen:

| Fig.1 | ein Blockschaltbild einer Vorrichtung gemäß der Erfindung, |
|---|---|
| Fig.2 | das Prinzip einer bei der Vorrichtung gemäß Fig.1 verwendeten Federbox, |
| Fig.3a, 3b | zwei Diagramme der Piloten-Handkraft über dem Steuerweg für den ungestörten sowie den gestörten Fall, |
| Fig.4a, 4b | die Signalverarbeitung durch den Begrenzer sowie das zweite Summationsglied betreffende Diagramme. |

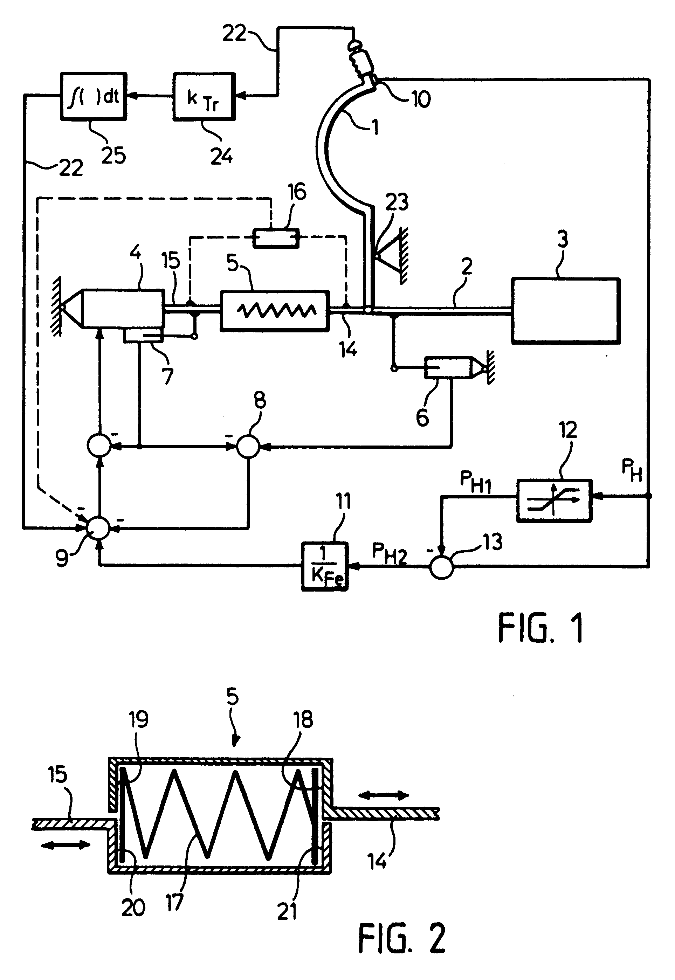

Fig.1 zeigt in schematischer Weise einen Steuerknüppel 1, beispielsweise eines Hubschraubers, ein an diesem von rechts her angelenktes Steuergestänge 2 für die Rotorblatteinstellung (bzw. die Höhenrudereinstellung), eine am Steuerknüppel 1 gegenüber dem Steuergestänge 2 angreifende Steuerstange 14, welche in eine Federbox hineinwirkt, deren Konstruktionsprinzip in Fig.2 dargestellt ist. Weiterhin ist ein Trimmotor 4 dargestellt, dessen aus- bzw. einfahrbare Trimmstange 15 von der anderen Seite in die Federbox 5 hineinwirkt. Weggeber 6 und 7 messen den Steuer- bzw. Stellweg des Steuergestänges 2 bzw. der Trimmstange 15.

Die Ausgangssignale dieser beiden Weggeber gelangen zu einem ersten Summationsglied 8, in dem das Ausgangssignal des Weggebers 7 von dem des Weggebers 6 subtrahiert wird.

Am Steuerknüppel 1 ist ein Steuerkraftgeber 10 angebracht, welcher die auf die am Griff des Steuerknüppels 1 anliegende Hand des Piloten wirkende Steuerkraft mißt. Als Steuerkraftgeber 10 können Kraftmeßdosen oder auch Dehnungsmeßstreifen verwendet werden, wobei erstere sich durch wesentlich geringere Störempfindlichkeit hinsichtlich einfallender elektromagnetischer Felder auszeichnet, letztere dagegen mit einer entsprechenden Abschirmung versehen werden müssen. Das Ausgangssignal des Steuerkraftgebers 10 gelangt zu einem Begrenzer 12, der dieses Signal oberhalb eines vorgebbaren, einstellbaren Grenzwertes abschneidet. Das Ausgangssignal dieses Begrenzers wird in einem nachgeordneten, (dritten) Summa-tionsglied 13 von dem des Steuerkraftgebers 10 subtrahiert. Das entstehende Summenbzw. Differenzsignal gelangt zu einem Verstärker 11, dessen Verstärkungsfaktor konstant oder aber einstellbar sein kann, und dessen Ausgangssignal gelangt schließlich zu einem (zweiten) Summationsglied 9, wo das Summen- bzw. Differenzsignal des ersten Summationsgliedes 8 subtrahiert wird. Das hierdurch entstehende Summen- bzw. Differenzsignal dient als Ansteuersignal für den Trimmotor 4.

Als gleich wirkende Alternative kann vorgesehen sein, daß der Weggeber 6 sowie das Summationsglied 8 durch einen gestrichelt dargestellten, einzigen Weggeber 16 ersetzt werden, welcher die Differenz zwischen den Steuer- bzw. Stellwegen der Steuerstange 14 sowie der Trimmstange 15 direkt mißt, wobei das entstehende Ausgangssignal dem Summationsglied 9 zuzuführen ist.

Die Funktionsweise der Federbox sei anhand der in Fig.2 wiedergegebenen Prinzipskizze erläutert. Eine Feder 17, oder auch ein Federpaket, ist zwischen Anschlagflächen 18, 19 eingelegt, die einen festen Abstand zueinander haben und konstruktiv fest mit der Steuerstange 14 verbunden sind. Die Feder 17 liegt gleichzeitig zwischen entsprechenden Anschlagflächen 20 und 21 der Trimmstange 15. Trimmstange 15 und Steuerstange 14 sind relativ zueinander axial verschiebbar. Die Abstände der Anschlagflächen 18, 19 sowie 20, 21 voneinander sind so bemessen, daß die Feder 17 ständig unter einer minimalen Vorspannung steht, durch welche die Ausbrechkraft für den Piloten gegeben ist, d.h. die Kraft, die er mindestens aufbringen muß, um eine Steuerbewegung zu bewirken, die sich dann in einer entsprechenden Stauchung der Feder 17 äußert. Wird nämlich vom Piloten eine Fluggeschwindigkeitserhöhung beabsichtigt, so muß er den Steuerknüppel 1 nach vorn drücken. Nachdem er die Ausbrechkraft überwunden hat, setzt die Knüppelbewegung ein, und gleichzeitig wird die Steuerstange 14 in Fig. 1 bzw. 2 nach rechts bewegt. Die Feder 17 wird gestaucht, da sie von der Anschlagfläche 19 mitgenommen, von der der Trimmstange zugehörigen Anschlagfläche 21 jedoch festgehalten wird. Nach Erreichen einer neuen stabilen Fluglage kann der Pilot durch ein Trimmsignal, das über eine in Fig.1 dargestellte Leitung 22 abgegeben wird, in üblicher Weise bewirken, daß der Trimmotor 4 seine Trimmstange 15 so weit nach rechts ausfährt, daß die Feder 17 bis auf die gegebene Vorspannung wieder entspannt wird, wobei die Anschlagflächen wieder dieselbe relative Lage zueinander haben wie im ausgetrimmten Zustand vor Einsetzen der Steuerbewegung bzw. wie in Fig.2 dargestellt.

Die in Fig.1 gezeigte Regelschaltung funktioniert ohne Auftreten einer Störung wie folgt: Zunächst geben die Weggeber 6 und 7 bei Vorliegen eines quasi einer Nulllage entsprechenden ausgetrimmten Zustandes des Steuerknüppels 1 gleichgroße Signale ab, die sich im Summationsglied 8 zu Null kompensieren. Will der Pilot aus einem ausgetrimmten Zustand etwa eine Erhöhung der Horizontalgeschwindigkeit bewirken, so drückt er wie oben beschrieben den Steuerknüppel 1 nach vorn. Der Weggeber 6 mißt eine Steuerwegveränderung $d_F$, die mit dem Federweg der Feder 17 identisch ist: $d_F = P_F/K_F$, wobei $P_F$ die von der Steuerstange 14 in die Feder eingeleitete Federkraft, $K_F$ die mechanische Federkonstante ist. Gleichzeitig tritt am Ort des Steuerkraftgebers 10 eine Handkraft $P_H$ auf, die über das durch den Ort des Drehlagerpunktes 23 des Steuerknüppels 1 bedingte Hebelverhältnis a/b zur Federkraft $P_F$ proportional ist: $P_F = (a/b) \cdot P_H$. Ein dieser Handkraft $P_H$ entsprechendes Ausgangssignal des Steuerkraftgebers 10 gelangt über das Summationsglied 13 zum Verstärker 11. Dort kann es mit einem Verstärkungsfaktor $k = 1/K_{Fe}$ multipliziert werden, so daß ein Signal $P_H/K_{Fe}$ zum Summationsglied 9 gelangt.

Das währenddessen vom Weggeber 6 abgegebene Ausgangssignal entspricht dem Federweg $d_F = P_F/K_F$. Dieses Signal gelangt über das Summationsglied 8 unverändert zum Summationsglied 9, da der Weggeber 7 keine Änderung des Stellweges der Trimmstange 15 feststellt. Wird nun der Steuerkraftgeber 10 entsprechend geeicht, so kann der Proportionalitätsfaktor a/b zu 1 gemacht werden, so daß die Eingangssignale für das Summationsglied 9 im vorliegenden Falle einander gleich sind, wenn im Verstärkungsfaktor k der Nenner $K_{Fe} = K_F$ gewählt wird: $d_F = P_F/K_F$. Somit wird kein Ansteuersignal an den Trimmotor 4 vom Summationsglied 9 abgegeben. Der Pilot muß wie oben beschrieben den Austrimmvorgang selbst einleiten.

Hierzu gelangt ein entsprechendes Trimmsignal über eine Leitung 22 sowie einen Verstärker 24 sowie einen nachgeschalteten Integrator 25 zum Summationsglied 9 und von dort zum Trimmotor 4.

Tritt nun als Störung eine Beschleunigung, beispielsweise infolge einer von vorn einfallenden Windbö, auf, so wirken vom Steuergestänge 2 her Trägheitskräfte auf das untere Ende des Steuerknüppels 1 ein. Diese haben ihre Ursache darin, daß das Steuergestänge mit Massen behaftet ist. Der in bezug auf den Drehlagerpunkt 23 obere Teil des Steuerknüppels 1 ist ebenfalls einer nach vorn wirkenden Trägheitsbeschleunigung ausgesetzt. Falls das hierdurch ausgeübte Drehmoment dasjenige von den zuvor genannten Kräften ausgeübte nicht übersteigt, ergibt sich ein resultierendes Drehmoment, welches das untere Ende des Steuerknüppels 1 in Fig.1 nach links zu bewegen sucht.

Der Pilot kann nun auf zweierlei Weise reagieren: Er kann theoretisch, was allerdings in der Praxis kaum der Fall sein wird, dem nach hinten (in Fig.1 nach rechts) drückenden Griff des Steuerknüppels 1 nachgeben oder aber, was zur Aufrechterhaltung der Fluglage erforderlich wäre, ihn durch entgegengerichteten Handdruck an einer Bewegung hindern.

Im ersteren Falle erfolgt nach Überwindung der Ausbrechkraft, die gerade wegen derartiger Störungen nicht zu klein bemessen werden soll, eine Stauchung der Feder 17 in der Federbox 5, verbunden mit einem Federweg $d_F = P_F/K_F$. Gleichzeitig ändert sich das Ausgangssignal des Weggebers 6 um einen diesem Federweg entsprechenden Betrag. Der Steuerkraftgeber 10 jedoch wird kein Ausgangssignal abgeben, da keine Spannungen in den Steuerknüppel 1 eingeleitet werden. Der Weggeber 7 ändert sein Ausgangssignal nicht. Daher kann die Änderung des Ausgangssignals des Weggebers 6 über beide Summationsglieder voll als Ansteuersignal an den Trimmotor 4 gelangen, der nun eine Entspannung der Feder 17 um eben den Steuerweg $d_F$ bewirkt, so daß der Steuerknüppel 1 wieder kräftefrei ist.

Hier ist zu beachten, daß die Regelung im Vergleich zu den auftretenden Störungen sehr schnell wirkt, da der gesamte Hubschrauber natürlich eine beachtliche Gesamtmasse besitzt und die Verzögerung durch eine Windbö daher nur relativ langsam eintritt. Es werden daher keine großen Federwege $d_F$ auftreten, vielmehr wird die Korrektur durch den Trimmotor 4 sehr schnell folgen.

Im zweiten Falle tritt am Ort des Steuerkraftgebers 10 eine Handkraft $P_H$ auf, die genau der im ersten Falle durch die Störung in die Feder 17 eingebrachten Federkraft $P_F$ gleicht, wobei nun jedoch keine Federstauchung eintritt, da der Steuerknüppel 1 festgehalten wird. Daher ändern beide Weggeber 6 und 7 ihre Ausgangssignale zunächst nicht, und dasjenige des Steuerkraftgebers 10 kann über Verstärker 11 und Summationsglied 9 voll als Ansteuersignal für den Trimmotor 4 wirksam werden, welcher nun eine Stauchung der Feder 17 in einem solchen Maße bewirkt, daß das auf den Steuerknüppel 1 ausgeübte Drehmoment genau aufgehoben und die Handkraft des Piloten kompensiert wird. Auch hier arbeitet die Regelung so schnell und feinfühlig, daß der Pilot gar keinen merklichen Druck verspürt.

In beiden geschilderten Fällen wird eine entscheidende Verbesserung der Flugstabilität als Resultat der erfindungsgemäßen Maßnahmen auf.

Natürlich können auch Überlagerungen von bewußten Steuerbewegungen und Störungen des erwähnten Typs vorkommen. Auch dann ergibt sich aus der Überlagerung der geschilderten Regelvorgänge der erwünschte stabilisierende Effekt.

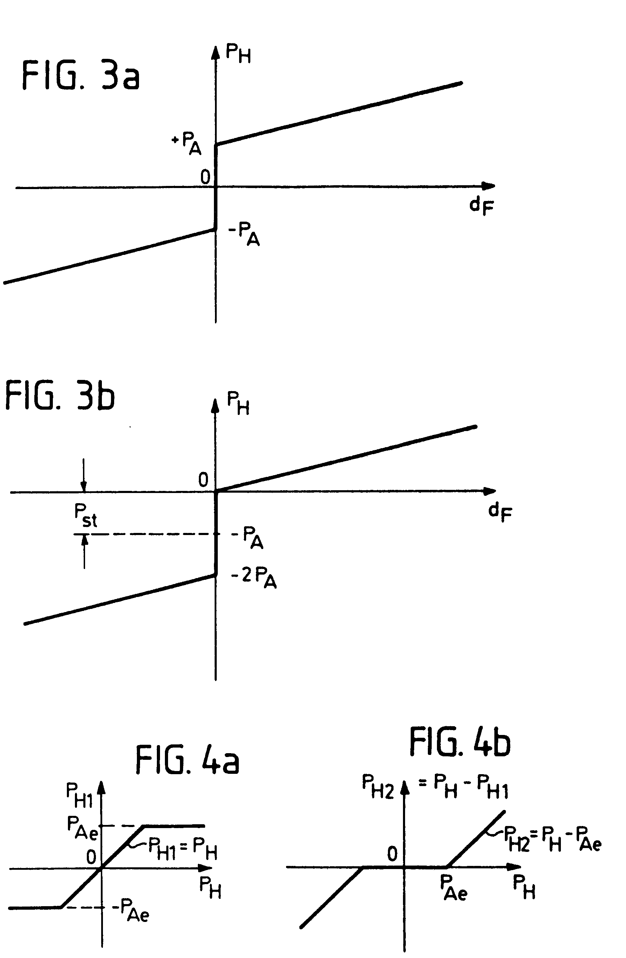

In Fig.3a ist die Abhängigkeit der Handkraft $P_H$ des Piloten von dem Steuerweg bzw. Federweg $d_F$ dargestellt, der sich ergibt, wenn er aus einem ausgetrimmten Zustand, der quasi einem variablen Nullpunkt entspricht, heraus eine Steuerbewegung einleitet. Die Ausbrechkraft $P_A$ ist durch die einstellbare mechanische Vorspannung der Feder 17 gegeben. Nach Überwindung dieser Ausbrechkraft ist der Steuerweg $d_F$ in linearer Abhängigkeit von der Handkraft $P_H$ in die Feder 17 einsteuerbar, und zwar aufgrund von deren besonderem Konstruktionsprinzip (Fig.2) in beiden Richtungen symmetrisch.

Fig.3b zeigt, wie sich das obige Diagramm bei Auftreten einer Störkraft $P_{St}$, die genau der Ausbrechkraft $P_A$ entspricht, verändert: Die Kurve wird um den Betrag dieser Störkraft $P_{St} = P_A$ in Richtung der Ordinate versetzt. Dies bedeutet, daß der Pilot, falls er in diesem Moment eine Steuerbewegung einleitet, in der einen Richtung gar keine und in der anderen Richtung eine verdoppelte Ausbrechkraft vorfindet. In der einen Richtung würde seine Steuerbewegung sofort in einen entsprechenden Federweg $d_F$ umgesetzt werden, in der anderen Richtung müßte zunächst die doppelte Ausbrechkraft $2P_A$ überwunden werden.

Der in Fig.1 noch dargestellte Begrenzer 12 hat folgende Funktion: Er läßt niedrige Signalwerte $P_H$, vom Steuerkraftgeber 10 her kommend, unverändert passieren, bis zu einem Begrenzungswert $P_{Ae}$, der bei weiter ansteigenden Signalwerten $P_H$ als konstanter Ausgangswert des Begrenzers 12 beibehalten wird, siehe Fig.4a. Schließlich ist ein am Ausgang des Summationsgliedes 13 abnehmbares Ausgangssignal $P_{H2}$ dem Signal $P_H$ auf die in Fig.4b wiedergegebene Weise zugeordnet. Der Begrenzungswert $P_{Ae}$ kann nun entweder gleich der durch die Vorspannung der Feder 17 gegebenen mechanischen Ausbrechkraft $P_A$ gewählt oder aber auf einen anderen Wert eingestellt werden.

Zunächst sei erläutert, wie die Regelschaltung mit dem Begrenzer 12 bei Einleiten einer normalen Steuerbewegung des Piloten reagiert. Er möge auf den Steuerknüppel 1 einen nach vorn gerichteten Druck im Sinne einer gewünschten Fluggeschwindigkeitserhöhung ausüben. Solange die Ausbrechkraft $P_A$, gegeben durch die mechanische Vorspannung der Feder 17, noch nicht überschritten ist, tritt weder ein Steuer- noch ein Federweg $d_F$ auf, das Ausgangssignal des Weggebers 6 bleibt unverändert. Allerdings mißt der Steuerkraftgeber 10 eine Handkraft $P_H < P_A$, das entsprechende Ausgangssignal kann jedoch das Summationsglied 13 noch nicht passieren, und zwar wegen der Begrenzercharakteristik (Fig.4). Erreicht die Handkraft $P_H$ des Piloten nun den Begrenzungswert $P_{Ae}$ des Begrenzers 12, der zunächst gleich der mechanischen Ausbrechkraft $P_A$ sein möge, so tritt einerseits ein Federweg $d_F$ und ein entsprechendes Ausgangssignal des Weggebers 6 und andererseits am Ausgang des Summationsgliedes 13 ein ebenso großes, nämlich den Federweg repräsentierendes Signal auf. Beide kompensieren sich im Summationsglied 9, so daß kein Ansteuersignal zum Trimmotor 4 gelangt. Der Pilot findet also ein ganz normales Verhalten vor und muß selbst austrimmen.

Wird der Begrenzungswert $P_{Ae}$ kleiner eingestellt als die mechanische Ausbrechkraft $P_A$, so erscheint am Ausgang des Summationsgliedes 13 schon von deren Erreichen ein Signal, welches den Trimmotor 4 zu einer Reaktion im Sinne einer scheinbaren Verminderung der für den Piloten spürbaren Ausbrechkraft veranlaßt: Es tritt sofort ein Federweg auf, obwohl die mechanische Ausbrechkraft $P_A$ noch nicht erreicht ist. Durch Einstellung des Begrenzungswertes $P_{Ae}$ ist demnach eine Veränderung der für den Piloten spürbaren Ausbrechkraft individuell erreichbar.

Tritt nun aus einem ausgetrimmten Zustand des Steuerknüppels 1 eine kleine, noch unterhalb der mechanischen Ausbrechkraft $P_A$ liegende Störkraft auf, so hat dies zunächst keinerlei Folgen, da die Störkraft voll von der vorgespannten Feder 17 aufgenommen wird, ohne daß jedoch ein Federweg bzw. ein Steuerweg der Steuerstange 14 auftritt. Somit bleibt der Steuerknüppel 1 in Ruhe und weder am Weggeber 6 noch am Steuerkraftgeber 10 treten Ausgangssignale auf. Überschreitet die Störkraft die mechanische Ausbrechkraft $P_A$, so spürt der Pilot eine Handkraft $P_H$, sobald er den Steuerknüppel 1 festhält, der sonst der Störkraft nachgeben würde. Das nun vom Steuerkraftgeber 10 abgegebene Ausgangssignal wird zunächst am Summationsglied 13 blockiert, und auch der Weggeber 6 verändert sein Ausgangssignal nicht. Der Pilot hat nun das Empfinden, als wenn er selbst eine kleine, noch unterhalb der Ausbrechkraft $P_A$ liegende Fühlbewegung am Steuerknüppel 1 durchführen würde, die jedoch zu keiner Änderung der Fluglage führt. Erst wenn das Ausgangssignal $P_H$ des Steuerkraftgebers 10 den Wert PA (im Falle $P_{Ae}$ = $P_A$) erreicht, gelangt vom Ausgang des Summationsgliedes 13 ein Ansteuersignal an den Trimmotor 4, welcher nunmehr durch entsprechende Reaktion die ggfs. weiter ansteigenden Störkräfte kompensiert.

Durch Einstellung des Verstärkungsfaktors k = $1/K_{Fe}$ des Verstärkers 11 ist es möglich, dem Piloten eine individuell wählbare Federsteifigkeit der Feder 17, die von der mechanischen Federkonstante $K_F$ abweicht, vorzugeben. Dies sei für den Fall verdeutlicht, daß der Pilot eine Steuerbewegung im Sinne einer Fluggeschwindigkeitserhöhung einleitet. Nach Überwindung der Ausbrechkraft $P_A$ der Feder 17 steht, wie oben bereits geschildert, am Ausgang des Weggebers 6 eine dem nun resultierenden Federweg $d_F$ entsprechende Änderung des Ausgangssignals an. Auch am Ausgang des Summationsgliedes 13 tritt ein Signal auf - es sei angenommen, daß $P_{Ae}$ = $P_A$ - welches nach Multiplikation mit dem Verstärkungsfaktor k des Verstärkers 11 an das Summationsglied 9 gelangt. Ist nun $K_{Fe}$ = $K_F$, so kompensieren sich die beiden am Summationsglied 19 vom Weggeber 6 und vom Steuerkraftgeber 10 her ankommenden Signale gegenseitig. Wird jedoch $K_{Fe} < K_F$ eingestellt, der Verstärkungsfaktor k des Verstärkers 11 also vergrößert, so ergibt sich am Ausgang des Summationsgliedes 9 ein resultierendes Ansteuersignal für den Trimmotor 4, welcher nun so in die Feder 17 steuert, daß diese etwas entspannt wird, wodurch sich eine scheinbar verkleinerte Federsteifigkeit bzw. ein verkleinerter Steuerkraftgradient der Kurve $P_H$ in Abhängigkeit vom Steuerweg $d_F$ ergibt. Umgekehrt ergibt sich für $K_{Fe} > K_F$, d.h. für eine Verkleinerung des Verstärkungsfaktors k, durch entsprechende Reaktion des Trimmotors 4 eine scheinbare Erhöhung der Federsteifigkeit der Feder 17. Dies bedeutet eine Veränderung der Steigung der in Fig.3a gegebenen Kurve, ausgehend von einer Parallelen zur Abszisse für den Fall $K_{Fe}$ = O und mit zunehmender Steigung bei zunehmendem $K_{Fe}$, wobei sich alle diese dem veränderlichen, einstellbaren Parameter $K_{Fe}$ entsprechenden Geraden im Punkt $P_H$ = $P_A$ auf der Ordinate schneiden.

**Patentansprüche**

1. Steuervorrichtung für Luftfahrzeuge, insbesondere Hubschrauber, mit einem Steuerknüppel (1) für die Höhenruder- bzw. Rotorblatteinstellung, einem am Steuerknüppel angebrachten, zur Erzeugung eines Trimmsignales (22) dienenden Trimmschalter, einem am Steuerknüppel angelenkten, diesen mit dem Hauptstellantrieb für die Höhenruder- bzw. Rotorblatteinstellung verbindenden Steuergestänge (2), einer mit ihrem einen Ende etwa gegenüber dem Steuergestänge am Steuerknüppel angreifenden Steuerstange (14), die mit ihrem anderen Ende auf eine Feder einwirkt, einem mit seiner Trimmstange (15) von der anderen Seite auf die Feder einwirkenden Trimmotor (4), einem den Steuerweg des Steuergestänges messenden, ersten Weggeber (6), einem den Stellweg der Trimmstange des Trimmotors messenden, zweiten Weggeber (7), einem dessen Ausgangssignal von dem des ersten Weggebers subtrahierenden, ersten Summationsglied (8), sowie einem ausgangsseitig ein Ansteuersignal für den Trimmotor liefernden, zweiten Summationsglied (9), **gekennzeichnet** durch

einen die Handkraft des Piloten am Steuerknüppel (1) messenden Steuerkraftgeber (10), einen dessen Ausgangssignal aufnehmenden Begrenzer (12), ein dessen Ausganggsignal von dem des Steuerkraftgebers (10) subtrahierendes, drittes Summationsglied (13) sowie einen dessen Summensignal aufnehmenden Verstärker (11),

wobei im zweiten Summationsglied (9) das Ausgangssignal des ersten Summationsgliedes (8) von dem des Verstärkers (11) subtrahiert wird und außerdem das Trimmsignal (22) dem zweiten Summationsglied (9) über einen weiteren Verstärker (24) und einen Integrator (25) zugeführt ist.

2. Vorrichtung nach Anspruch 1, **dadurch gekennzeichnet,** daß anstelle des ersten Weggebers (6) und des ersten Summationsgliedes (8) ein direkt die Differenz des Steuerweges des Steuergestänges (2) sowie des Stellweges der Trimmstange (15) messender, ausgangsseitig mit dem dritten Summationsglied (9) verbundener Weggeber (16) vorgesehen ist.

3. Vorrichtung nach Anspruch 1 oder 2, dadurch **gekennzeichnet,** daß der Steuerkraftgeber (10) eine Kraftmeßdose ist.

4. Vorrichtung nach Anspruch 1 oder 2, dadurch **gekennzeichnet,** daß als Steuerkraftgeber (10) Dehnungsmeßstreifen verwendet werden.

5. Vorrichtung nach einem der vorhergehenden Ansprüche, dadurch **gekennzeichnet,** daß der Verstärkungsfaktor des Verstärkers (11) einstellbar ist.

6. Vorrichtung nach einem der vorhergehenden Ansprüche, dadurch **gekennzeichnet,** daß der Begrenzungswert des Begrenzers (12) einstellbar ist.

**Claims**

1. Control device for aircraft, in particular helicopters, comprising a control stick (1) for elevator- or rotor blade adjustment respectively, a trimmer switch attached to the control stick serving to produce a trimmer signal (22), control rods (2) hinged to the control stick and connecting the latter to the main actuator of the elevator- or rotor blade adjustment respectively, another control rod (14) which engages the control stick with its one end approximately opposite the control rods (2) and which acts with its other end on a spring, a trimmer motor (4) which acts on the other side of the spring via its trimmer rod (15), a first path transducer (6) which indicates the control path of the control rods, a second path transducer (7) which indicates the control path of the trimmer rod of the trimmer motor, a first summation means (8) which subtracts the output signal of the latter from that of the first path transducer, and a second summation means (9) which delivers on the output side a control signal for the trimmer motor, characterised by a control-force transducer (10) which measures the manual force applied by the pilot to the control stick (1), a limiter (12) which receives its output signal, a third summation means (13) which subtracts the output signal of the latter from that of the control-force transducer (10), and an amplifier (11) which receives its sum signal whereby in the second summation means (9) the output signal of the first summation means (8) is subtracted from that of the amplifier (11), and the trimmer signal (22) is fed to the second summation means (9) via an additional amplifier (24) and an integrator (25).

2. Device according to claim 1, characterised in that, in place of the first path transducer (6) and the first summation means (8), a path transducer (16) is provided, which directly measures the difference between the control path of the control rods (2) and the control path of the trimmer rod (15), and which is connected to the output side of the third summation means (9).

3. Device according to claim 1 or 2, characterised in that the control-force transducer (10) is a load cell.

4. Device according to claim 1 or 2, characterised in that the control-force transducers (1) are strain-gauge strips.

5. Device according to one of the above claims, characterised in that the amplification factor of the amplifier (11) is adjustable.

6. Device according to one of the above claims, characterised in that the limiting value of the limiter (12) is adjustable.

## Revendications

1. Dispositif de commande pour aéronef, notamment pour hélicoptère, comprenant un manche à balai (1) pour le réglage des gouvernes de profondeur ou des pales du rotor, un commutateur d'équilibrage monté sur le manche à balai pour la production d'un signal d'équilibrage (22), une tringlerie de commande (2) articulée sur le manche à balai et reliant celui-ci au servo-moteur principal pour le réglage des gouvernes de profondeur ou des pales du rotor, une tringle de commande (14) qui agit par l'une de ses extrémités sur le manche à balai sensiblement en regard de la tringlerie de commande et par son autre extrémité sur un ressort, un moteur d'équilibrage (4) agissant par la tringle d'équilibrage (15) de l'autre côté sur le ressort, un premier capteur de course (6) mesurant la course de commande de la tringlerie de commande, un deuxième capteur de course (7) mesurant la course de réglage de la tringle d'équilibrage du moteur d'équilibrage, un premier organe additionneur (8) soustrayant le signal de sortie du deuxième capteur de celui du premier capteur, ainsi qu'un deuxième organe additionneur (9) délivrant, côté sortie, un signal de commande pour le moteur d'équilibrage, **caractérisé** par
   - un capteur de force de commande (10) mesurant la force de la main du pilote sur le manche à balai, un limiteur (12) recevant son signal de sortie, un troisième organe additionneur (13) soustrayant le signal de sortie dudit limiteur de celui du capteur de force de commande (10), ainsi qu'un amplificateur (11) recevant le signal de sommation dudit organe additionneur,
   - le signal de sortie du premier organe additionneur (8) est soustrait du signal de l'amplificateur (11) dans le deuxième organe additionneur (9), et en outre, le signal d'équilibrage (22) est envoyé au deuxième organe additionneur (9) par l'intermédiaire d'un amplificateur (24) supplémentaire et d'un intégrateur (25).

2. Dispositif selon la revendication 1, **caractérisé** en ce qu'il est prévu à la place du premier capteur de course (6) et du premier organe additionneur (8) un capteur de course (16) mesurant directement la différence de la course de commande de la tringlerie de commande (2) ainsi que de la course de réglage de la tringle d'équilibrage (15) relié, côté sortie, au troisième organe additionneur (13).

3. Dispositif selon la revendication 1 ou 2, **caractérisé** en ce que le capteur de force de commande (10) est un capteur dynamométrique.

4. Dispositif selon la revendication 1 ou 2, **caractérisé** en ce qu'on utilise des jauges extensométriques comme capteurs de force de commande (10).

5. Dispositif selon l'une des revendications précédentes, **caractérisé** en ce que le facteur d'amplification de l'amplificateur (11) est réglable.

6. Dispositif selon l'une des revendications précédentes, **caractérisé** en ce que la valeur de limitation du limiteur (12) est réglable.

FIG. 1

FIG. 2

8

FIG. 3a

$P_H$

$+P_A$

0

$d_F$

$-P_A$

FIG. 3b

$P_H$

0

$d_F$

$P_{st}$

$-P_A$

$-2P_A$

FIG. 4a

$P_{H1}$

$P_{Ae}$

0

$P_{H1} = P_H$

$P_H$

$-P_{Ae}$

FIG. 4b

$P_{H2} = P_H - P_{H1}$

0

$P_{H2} = P_H - P_{Ae}$

$P_{Ae}$

$P_H$